# FASCICULE DE BREVET EUROPEEN

(11) **EP 2 165 794 B1**
(45) Date de publication et mention de la délivrance du brevet: **20.06.2018**
(21) Numéro de dépôt: 09170726.5
(22) Date de dépôt: 18.09.2009
(51) Int. Cl.: B23K 1/00, B23K 1/19, B23K 1/20, B23K 35/30, C04B 37/00, C22C 28/00

(54) **Procédé d'assemblage moyennement réfractaire de pièces en matériaux à base de SiC par brasage non réactif ; Composition et suspension de brasure ; Joint et assemblage obtenus par ce procédé**
Verfahren zum durchschnittlich hitzebeständigen Verbinden von SiC-Werkstücken durch nicht reaktiv Löten ; Lötmaterial und-mischung ; Durch dieses Verfahren hergestellte Naht und Verbindung
Process of joining in an average refractory state of workpieces made of SiC using non reactive brazing ; Brazing composition and suspension ; Joint and assembly obtained through this process

(30) Priorité: 22.09.2008 FR 0856352
(43) Date de publication de la demande: 24.03.2010
(73) Titulaire: Commissariat à l'Énergie Atomique et aux Énergies Alternatives, 75015 Paris (FR)
(72) Inventeur: Chaumat, Valérie, 38760 Saint-Paul-de-Varces (FR); Henne, Jean-François, 38000 Grenoble (FR)
(74) Mandataire: Augarde, Eric

(56) Documents cités:
- US-A- 5 447 683
- US-A- 5 560 993
- US-A1- 2005 079 343
- US-A1- 2005 127 146
- US-A1- 2006 162 849
- DATABASE WPI Week 198637 Thomson Scientific, London, GB; AN 1986-241412 XP002526446 -& JP 61 169189 A (MIYATA GIKEN KK) 30 juillet 1986 (1986-07-30)

## Description

### DOMAINE TECHNIQUE

La présente invention est relative à un procédé d'assemblage moyennement réfractaire de pièces en matériaux à base de carbure de silicium par brasage non réactif et un assemblage conformément au préambule des revendications 1 et 18 (voir, par exemple, US2005/127146 A1). Par matériaux "à base de carbure de silicium", on entend généralement un matériau dont la teneur en SiC est supérieure ou égale à 50 % en masse, de préférence supérieure ou égale à 80% en masse, de préférence encore de 100% en masse, dans ce dernier cas on peut dire que le matériau est constitué ou composé de carbure de silicium.

Le carbure de silicium peut se présenter sous la forme de fibres de carbure de silicium ou de poudre de carbure de silicium frittée ou liée par un liant en céramique.

Ces matériaux à base de carbure de silicium peuvent être notamment du carbure de silicium pur tel que du carbure de silicium pur α (SiCα) ou β (SiCβ), des substrats en carbure de silicium infiltré de silicium (SiSiC), ou des matériaux composites à base de SiC tels que des matériaux composites à fibres et/ou à matrice de carbure de silicium.

Le domaine technique de l'invention peut être défini comme étant le brasage à « moyenne température », c'est-à-dire qu'il met en oeuvre des températures ne dépassant pas 1300°C, de préférence ne dépassant pas 1250 °C.

Les assemblages concernés par la présente invention sont donc généralement considérés comme « moyennement réfractaires » c'est-à-dire que la température maximale d'utilisation de ces assemblages va généralement jusqu'à 1000°C voire 1100°C et peut être par exemple de l'ordre de 1000°C.

Ces assemblages peuvent rentrer dans la fabrication de composants de formes complexes nécessitant à la fois une très bonne tenue mécanique entre les substrats à base de carbure de silicium et une étanchéité satisfaisante de part et d'autre du joint.

### ÉTAT DE LA TECHNIQUE ANTÉRIEURE

On sait qu'il est difficile de fabriquer des pièces de grandes dimensions en céramique, en particulier, en SiC. En effet, les tolérances après frittage des composants primaires en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de silicium tel que le carbure de silicium.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Une telle technique est notamment nécessaire pour fabriquer des structures du type échangeur de chaleur, de composants de structure en carbure de silicium ayant une température d'utilisation, par exemple, jusqu'à 1000°C voire 1100°C.

Du fait des températures élevées, voisines par exemple de 1000°C, mises en oeuvre dans les applications des céramiques telles que le carbure de silicium, l'assemblage de ces céramiques par collage avec des adhésifs organiques est exclus, car les températures d'usage de ce type d'assemblage ne peuvent dépasser au maximum 200°C.

Les assemblages purement mécaniques, par exemple par agrafage ou par vissage n'assurent qu'un contact partiel et aléatoire entre les pièces. Les assemblages ainsi obtenus ne peuvent pas être étanches.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier, le carbure de silicium se décompose avant fusion.

Des techniques courantes pour réaliser des assemblages réfractaires de céramiques sont le soudage par diffusion en phase solide, et l'assemblage frittage ou cofrittage.

Dans l'assemblage par soudage diffusion, on applique à haute température une pression au niveau des interfaces pour permettre une inter-diffusion atomique entre les deux substrats. La température doit rester toujours inférieure à la température de fusion du matériau le moins réfractaire et il n'y a donc aucune phase liquide dans le système. Ce type d'assemblage est réalisé soit sous presse dans une seule direction, soit dans une enceinte isostatique. Le soudage diffusion est bien adapté aux assemblages entre deux alliages métalliques et très peu à l'assemblage de matériaux céramiques car les atomes constituant la céramique diffusent très peu au niveau du joint. En outre, le procédé est rédhibitoire d'un point de vue mécanique, car il nécessite de mettre en compression les substrats et les matériaux poreux et fragiles comme des substrats à base de carbure de silicium, qui risquent d'être fortement endommagés lors de ce chargement mécanique en compression.

L'assemblage-frittage ou cofrittage de pièces en SiC, nécessite également de hautes pressions mais aussi de hautes températures et durées de palier importantes, car ce procédé est basé sur le principe de l'inter-diffusion entre les éléments en SiC.

En d'autres termes, le soudage par diffusion en phase solide ainsi que l'assemblage frittage présentent le désavantage d'être contraignants du point de vue de leur mise en oeuvre car :
- pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).
- dans le cas du cofrittage ou assemblage frittage, les mêmes problèmes demeurent (forme des pièces, complexité de mise en oeuvre) avec en plus la nécessité de contrôler le frittage d'une poudre d'apport à intercaler entre les deux matériaux à assembler.
- ces deux techniques nécessitent en outre l'utilisation de paliers de longue durée (une à plusieurs heures) à haute température puisque les processus mis en jeu font intervenir la diffusion à l'état solide.

Il ressort de ce qui précède, et en résumé, que afin de garantir notamment une bonne tenue mécanique et une étanchéité satisfaisante au niveau de l'assemblage, seuls des procédés utilisant une phase liquide, comme le brasage, peuvent être envisagés.

Le brasage est une technique peu coûteuse, facile de mise en oeuvre, qui est la plus couramment utilisée. Des pièces de forme complexe peuvent être réalisées en faisant du brasage, et les opérations de brasage se limitent à placer entre les pièces à assembler ou à proximité du joint entre les deux pièces, un alliage de brasage, appelé brasure, ou un alliage d'apport, cet alliage étant capable de mouiller et de s'étaler sur les interfaces à assembler pour remplir le joint entre les pièces et à faire fondre cet alliage. Après refroidissement, la brasure se solidifie et assure la cohésion de l'assemblage.

La plupart des compositions de brasure pour les pièces en matériaux à base de carbure de silicium ne sont pas suffisamment réfractaires, en d'autres termes peuvent être décrites comme étant moyennement réfractaires. Il s'agit généralement de compositions de brasure constituées par des alliages métalliques ayant un point de fusion inférieur, voire très inférieur, à 1000°C. Une telle température de fusion est nettement insuffisante pour les applications à des températures voisines de 1 000°C ou 1100°C.

Par ailleurs, la plupart des éléments chimiques qui font partie de ces compositions de brasure métalliques sont fortement réactifs avec le carbure de silicium dès 500°C et créent des composés fragiles.

Par conséquent, dans le cas d'un brasage mis en oeuvre au-dessus de 1000°C, de telles compositions de brasure ou alliages de brasage attaqueraient chimiquement les matériaux à base de carbure de silicium non seulement pendant l'opération de brasage mais également en fonctionnement par diffusion à l'état solide.

En outre, les alliages les moins réactifs sont aussi les moins réfractaires, comme par exemple, l'alliage AgCuTi avec une matrice en Ag-Cu et un élément actif Ti à faible concentration. Pour les applications plus particulièrement visées par l'invention qui sont celles d'un assemblage moyennement réfractaire avec une température d'utilisation des assemblages pouvant aller généralement jusqu'à 1000°C, toutes les compositions de brasure réactives constituées principalement d'argent ou d'argent-cuivre, de cuivre, de nickel, de fer ou de cobalt, de platine, de palladium ou d'or sont donc à exclure du fait de leur forte réactivité avec le carbure de silicium.

Des formulations d'alliages de brasage plus réfractaires et riches en silicium sont présentées dans les documents [1, 2, 3]. Ces compositions de brasure présentent un comportement très peu réactif, voire non réactif, avec le SiC, ce qui évite la formation des composés fragiles. Ce critère de non réactivité ou très faible réactivité n'est toutefois pas une condition suffisante pour garantir une bonne tenue mécanique des joints brasés. En effet, dans la littérature, les valeurs des contraintes à rupture sont très variables en fonction du second élément intervenant dans la composition de brasure à base de silicium. Par exemple, pour le système non réactif Fe-Si (45 % Fe-55 % Si en masse), le document [3] mentionne une contrainte à rupture en traction extrêmement faible de l'ordre de 2 MPa tandis que pour le système Cr-Si (25% Cr-75% Si en masse), ce même document donne une valeur plus élevée, de l'ordre de 12 MPa.

Les propriétés notamment mécaniques d'une composition de brasure à base de silicium sont totalement imprévisibles et ne peuvent absolument pas se déduire des propriétés mécaniques de compositions de brasure à base de Si, même très voisines, déjà connues.

En d'autres termes, lorsque l'on cherche à préparer une composition de brasure à base de silicium, notamment pour braser des pièces à base de SiC, il n'est absolument pas possible de se baser sur les propriétés mécaniques éventuellement acceptables présentées par d'autres compositions de brasure connues à base de Si, car toute modification même très faible d'une composition de brasure à base de Si, aussi bien en ce qui concerne la nature du ou des métaux brasés avec le silicium, que leurs proportions, peut conduire à des changements imprévisibles, inattendus, très importants des propriétés de la composition, et en particulier de ses propriétés mécaniques.

En conclusion, il n'existe pas de possibilité de prédire la mécanique d'un système Si-X donné où X est un métal et encore moins la mécanique d'un système en fonction des proportions de X.

Les températures de brasage des compositions de brasure des documents [1, 2] et [3] sont en général supérieures à 1300°C. Ces températures de brasage sont par exemple de 1355°C pour la composition Ti-Si (22 - 78 % en masse), de 1355°C pour la composition Cr-Si (25 - 75 % en masse), de 1350°C à 1450°C pour la composition Co-Si, et de 1750°C pour la composition Ru₂Si₃.

En effet, l'efficacité de ce procédé d'assemblage nécessite des températures de brasage supérieures à 1300°C pour déstabiliser thermodynamiquement les couches d'oxydes de silicium passivantes qui apparaissent spontanément sur les surfaces de carbure de silicium, car ces couches d'oxyde de silicium nuisent au mouillage par la composition de brasure, même si le brasage est réalisé sous vide.

Par conséquent, les alliages de brasage sus-mentionnés, riches en silicium et mis en oeuvre à une température supérieure à 1300°C ne sont pas adaptés au brasage de substrats en matériau à base de carbure de silicium dont les propriétés se dégradent après exposition à 1300°C ou au-delà.

Le document [3] présente certes une composition de brasure Ge-Si (10 % - 90 %) dont le brasage peut être mis en oeuvre à 1220°C. Mais, la tenue mécanique de ce joint (contrainte à rupture en traction entre 300 et 400 p.s.i. soit entre 2 et 2,75 MPa) est très faible et insuffisante pour de nombreuses applications, ceci malgré la faible réactivé de cette brasure avec le SiC.

Le document [2] propose un alliage Pt-Si dont le brasage est mis en oeuvre à 1200°C. La teneur en Pt de cette composition de brasure est très élevée (77 % en poids de Pt) ce qui conduit à un procédé très onéreux. Cet inconvénient est rédhibitoire pour la réalisation de grandes pièces brasées.

Enfin, le document [4] présente des alliages de brasage avec une teneur en Si inférieure à 50 % en masse, de préférence de 10 à 45% en masse, et avec addition d'au moins 2 éléments choisis dans le groupe suivant : Li, Be, B, Na, Mg, P, Sc, Ti, V, Cr, Mn, Fe, Co, Zn, Ga, Ge, As, Rb, Y, Sb, Te, Cs, Pr, Nd, Ta, W et Tl.

Les exemples du document [4] décrivent des compositions de brasure ternaires Si-Cr-Co (11 - 38,5 - 50,5 % en masse) ; Si-Cr-Co (40 - 26 -34 % en masse) ; Si-Fe-Cr (17,2 - 17,5 - 65,3 % en masse) ; et Si-Fe-Co (20 - 20 -60 % en masse) ; et leur brasage à des températures respectives de 1230°C, 1235°C, 1460°C et 1500°C.

En ce qui concerne les compositions de brasure ayant des températures de brasage inférieures à 1300°C, il est simplement mentionné qu'une liaison « forte » est obtenue et aucun test mécanique ne vient prouver qu'une bonne tenue mécanique des joints est effectivement obtenue. De même, la faible réactivité SiC/brasure n'est ni mentionnée, ni évoquée.

Il existe donc, au vu de ce qui précède, un besoin non encore satisfait pour un procédé permettant de réaliser l'assemblage par brasage de pièces en matériaux à base de carbure de silicium qui assure à la fois une étanchéité du joint, ainsi qu'une tenue mécanique satisfaisante de l'assemblage au-dessus de 500°C et qui utilise des températures de brasage inférieures à 1300°C.

En effet il est essentiel que les pièces, substrats conservent toute leur intégrité et leurs performances initiales à l'issue de l'opération d'assemblage par brasage. Il existe donc un besoin pour un procédé de brasage utilisant des compositions de brasure qui permettent d'atteindre les températures d'usage souhaitées, à savoir jusqu'à 1000°C voire 1100°C, tout en évitant de soumettre les pièces, substrats en matériaux à base de carbure de silicium à des domaines de température qui pourraient altérer ces matériaux.

En d'autres termes, il existe un besoin pour un procédé de brasage qui permette d'obtenir des joints brasés moyennement réfractaires (avec une utilisation jusque vers 1000°C voire 1100°C) en utilisant des cycles de brasage ne dépassant pas 1300°C, de préférence ne dépassant pas 1250°C.

En effet au-dessus de cette température, de nombreux matériaux à base de silicium, notamment les composites, sont altérés de manière irréversible. C'est notamment le cas des composites SiC/SiC à matrice autocicatrisante, dans lesquels des verres protègent les fibres de SiC en fonctionnement sous air vers 800°C par exemple.

Autrement dit, il existe un besoin pour un procédé permettant d'une part d'utiliser tout le potentiel réfractaire des substrats à base de carbure de silicium, avec des températures d'usage jusqu'à environ 1000°C voire 1100°C, et d'autre part de braser à une température de brasage inférieure à la température d'altération des substrats, avec une température de fusion de l'alliage de brasage inférieure à 1300°C voire mieux inférieure à 1250°C.

Il existe aussi un besoin pour un procédé permettant de réaliser, l'assemblage par brasage moyennement réfractaire, de pièces en matériaux à base de carbure de silicium quelle que soit leur forme et/ou leur taille.

Il existe en particulier un besoin pour un procédé de brasage permettant de réaliser le brasage moyennement réfractaire de pièces à base de carbure de silicium de grandes tailles et/ou de géométries complexes, présentant notamment des surfaces à braser importantes.

En outre, aucun des procédés et des compositions de l'art antérieur ne remplit simultanément les critères suivants, mis en évidence par les inventeurs, et qui sont fondamentaux pour réaliser des composants de structure en SiC impliquant des joints, moyennement réfractaires :
1) la composition de brasure doit permettre de réaliser une liaison forte entre les deux pièces en matériau à base de carbure de silicium, ce qui implique une composition de brasure non réactive, c'est-à-dire chimiquement compatible avec le carbure de silicium, et qui ne forme pas de composés fragiles avec celui-ci. Toutefois, la non réactivité ne garantit pas la création d'une liaison forte car ceci reste imprévisible. La non réactivité est une condition nécessaire pour avoir une liaison forte mais pas suffisante. Ainsi, le système Fe-Si cité dans la littérature [3] est non réactif mais sa tenue mécanique est très faible.
2) la composition de brasure doit bien mouiller le carbure de silicium et bien adhérer à celui-ci.
3) la composition de brasure doit être compatible avec tous les dispositifs de chauffage notamment les dispositifs de chauffage rapides et/ou localisés.
4) la composition de brasure doit permettre la formation de joints présentant une bonne tenue mécanique.
5) la composition de brasure doit être constituée d'un nombre limité d'éléments, afin de faciliter sa préparation et sa mise en oeuvre.
6) la composition de brasure ne doit pas contenir d'éléments onéreux, tels que des métaux précieux.

Enfin, le procédé et la brasure associée doivent permettre le brasage, l'assemblage de tout type de matériau à base de carbure de silicium et doivent pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, à l'ensemble des exigences et critères mentionnés ci-dessus, qui élimine les inconvénients, défauts, limitations rencontrés avec les procédés de l'art antérieur, et qui permette d'obtenir une bonne étanchéité du joint, ainsi qu'une tenue mécanique satisfaisante de l'assemblage au-dessus de 500°C et qui utilise des températures de brasage inférieures à 1300°C.

### EXPOSÉ DE L'INVENTION

Ce but, et d'autres encore, sont atteints conformément à l'invention par un procédé d'assemblage d'au moins deux pièces en matériaux à base de carbure de silicium par brasage moyennement réfractaire non réactif tel que défini dans la revendication 1. Par brasage moyennement réfractaire, on entend un brasage généralement réalisé à une température comprise entre 1150°C et 1300°C, de préférence entre 1200°C et 1300°C.

Par joint moyennement réfractaire, on entend que ce joint est généralement capable de résister à des températures de fonctionnement allant jusqu'à 1000°C voire 1100°C, et généralement voisines de 1000°C voire 1100°C.

Le procédé selon l'invention, qui est un procédé de brasage moyennement réfractaire à une température inférieure ou égale à 1300°C, mettant en oeuvre une composition de brasure spécifique, n'a jamais été décrit dans l'art antérieur.

En particulier, la composition de brasure spécifique mise en oeuvre selon l'invention qui, de manière étonnante permet le brasage moyennement réfractaire à une température inférieure ou égale à 1300 °C de pièces en matériaux à base de carbure de silicium n'est en aucune manière mentionnée dans les documents de l'art antérieur cités plus haut.

Ainsi le document [4] mentionne incidemment l'yttrium parmi une liste de 27 métaux pouvant former une composition de brasure avec le silicium. Le silicium est toujours présent à moins de 50% en masse. Aucune des compositions de brasure exemplifiées dans ce document ne contient de l'yttrium. Ce document ne contient aucune indication pouvant conduire à choisir l'yttrium, et a fortiori une teneur spécifique en celui-ci pour préparer une brasure compatible avec le SiC, assurant un brasage à 1300°C ou à moins de 1300°C de pièces à base de SiC, et un assemblage effectif de ces pièces.

Le procédé selon l'invention répond aux besoins, satisfait à l'ensemble des exigences et des critères mentionnés ci-dessus, et ne présente pas les inconvénients des procédés de l'art antérieur.

En particulier, le procédé selon l'invention permet pour la première fois la préparation d'assemblages moyennement réfractaires, c'est-à-dire avec une température de mise en oeuvre pouvant aller jusqu'à 1000°C voire 1100°C de pièces en matériaux à base de carbure de silicium quelle que soit leur géométrie, même très complexe et/ou leur taille.

Le procédé selon l'invention assure dans tous les cas, notamment, une bonne étanchéité du joint, un bon remplissage du joint par la brasure ainsi qu'une excellente tenue mécanique de l'assemblage à température ambiante et à chaud, en particulier au-dessus de 500°C.

Le procédé selon l'invention est en outre simple, fiable, facile à mettre en oeuvre et au total peu onéreux.

En d'autres termes, les multiples avantages et effets surprenants de l'invention peuvent être énumérés comme suit, sans que cette énumération soit considérée comme limitative :
- l'assemblage obtenu selon l'invention permet de garantir un très bon accrochage mécanique entre les substrats à base de carbure de silicium même pour des températures maximales d'utilisation supérieure à 500°C et pouvant aller par exemple jusqu'à 1000°C voire 1100°C selon la composition de l'alliage de brasage. Les ruptures ont lieu en mode "cohésif", c'est-à-dire que les fissures ont lieu dans les substrats à base de carbure de silicium et non pas au niveau du joint brasé ;
- la température de brasage est inférieure ou égale à 1300°C et il est donc possible avec le procédé selon l'invention d'assembler des pièces, substrats à base de carbure de silicium qui ne peuvent pas supporter des températures supérieures à 1300°C, comme des pièces, substrats en composite à matrice céramique et fibres céramiques avec matrice autocicatrisante ;
- de manière surprenante, malgré la température de brasage égale à 1300°C ou inférieure à 1300°C mise en oeuvre dans le procédé de l'invention, un bon mouillage de la composition de brasure, de l'alliage de brasage selon l'invention sur les surfaces des substrats, pièces, à base de carbure de silicium à assembler, a été constaté. Ainsi, grâce à ce bon mouillage des surfaces, il est possible selon l'invention de faire du brasage capillaire car la composition de brasure selon l'invention peut remplir toute seule le joint entre les pièces pendant l'opération de brasage ;
- les joints brasés obtenus par le procédé selon l'invention sont étanches. Le procédé selon l'invention est par conséquent adapté pour des opérations de scellement devant résister à des températures maximales entre 850°C et 1100°C selon la composition de l'alliage de brasage ;
- une réactivité extrêmement modérée de l'alliage de brasure sur les substrats à base de carbure de silicium a été observée. Il n'y a pas de zones fragilisantes complexes et poreuses au niveau de l'interface ;
- le brasage réalisé par le procédé selon l'invention est réversible. Il est ainsi possible de désunir, séparer, les pièces substrats assemblés, par exemple en vue de leur réparation, en faisant fondre l'alliage de brasage dans un four au cours d'une seconde opération de fusion de cet alliage de brasage, sans altérer les pièces, substrats. Les pièces, substrats peuvent également être séparés par une attaque chimique ;
- une autre propriété remarquable obtenue par le procédé selon l'invention est l'homogénéité du joint obtenu après brasage ;
- il n'est pas nécessaire dans le procédé selon l'invention de métalliser par la brasure les pièces, substrats, en matériau à base de SiC avant l'opération de brasage à une température inférieure à 1300°C, les joints sont bien remplis par la composition de brasure selon l'invention, même en configuration capillaire ;
- les compositions de brasure ne contiennent aucun élément chimique précieux, notamment des métaux de la famille du platine, ce qui limite leur coût et le coût du procédé les mettant en oeuvre, par rapport à de nombreuses compositions de l'art antérieur.

Comme on l'a déjà mentionné plus haut, le comportement des compositions de brasure plus particulièrement pour le brasage du SiC, est extrêmement imprévisible et ne peut en aucun cas se déduire du comportement des compositions de brasure connues même voisines.

Rien ne pouvait laisser prévoir que la mise en oeuvre de la composition spécifique selon l'invention dans un procédé de brasage de pièces à base de SiC pourrait permettre un brasage à 1300°C ou à moins de 1300°C avec tous les effets bénéfiques et avantages énumérés plus haut notamment quant à l'étanchéité du joint et la tenue mécanique de l'assemblage au-dessus de 500°C sans détérioration des pièces.

La composition de brasure mise en oeuvre dans le procédé selon l'invention est avantageusement constituée en pourcentages en masse, de 59 % de silicium et de 41 % d'yttrium.

Des procédés mettant en oeuvre les différentes compositions de brasure définies par les pourcentages avantageux, précisés ci-dessus ne sont, a fortiori, ni décrits ni suggérés dans l'art antérieur.

Avantageusement, préalablement au brasage, on peut effectuer un ajout d'un renfort dans la composition de brasure.

Ce renfort peut être en un matériau choisi parmi le SiC, et le C.

Ce renfort peut se présenter sous la forme de particules, par exemple d'une poudre ; de fibres ; d'un non tissé de fibres ; ou d'un tissu de fibres.

L'ajout du renfort peut être réalisé en une quantité de 5 à 49 % en masse par rapport à la masse de la composition de la brasure.

Avantageusement dans le procédé selon l'invention, on peut former une poudre de composition de brasure, mettre en suspension cette poudre dans un liant organique de façon à obtenir une suspension ou pâte et enduire au moins une surface des pièces à assembler avec la suspension ou pâte obtenue.

Ainsi on peut enduire une surface à assembler d'au moins l'une des pièces à assembler avec la suspension ou pâte, puis mettre en contact les surfaces à assembler des pièces de façon à ce que la suspension ou pâte soit intercalée entre celles-ci, ou bien on peut mettre en contact les pièces à assembler en observant un décalage entre celles-ci de façon à créer une surface susceptible de recevoir la suspension ou pâte à proximité du joint formé par les surfaces à assembler des pièces à assembler, puis on peut déposer la suspension ou pâte sur cette surface.

Avantageusement, préalablement à la mise en contact avec la composition de brasure on peut déposer du carbone, par exemple de la poudre de carbone sur au moins une des surfaces à assembler des pièces.

Avantageusement, le brasage peut être effectué à une température de brasage supérieure d'au moins 30°C à la température de fusion de la composition de brasure.

Avantageusement, le brasage peut être réalisé en effectuant un palier de brasage à une température de brasage de 1245°C à 1280°C, maintenue pendant une durée de 20 à 90 minutes.

De préférence, le palier de brasage peut être effectué à une température de brasage de 1250°C maintenue pendant une durée de 30 minutes.

Avantageusement, préalablement au palier de brasage on peut observer un premier palier à une température de 1120°C à 1150°C maintenue pendant une durée de 30 à 120 minutes, de préférence de 60 à 90 minutes.

Avantageusement, les matériaux à base de carbure de silicium peuvent être choisis parmi les carbures de silicium pur tels que le carbure de silicium pur α (SiCα) ou β (SiCβ) et les matériaux composites à base de SiC tels que les composite à fibres et/ou à matrice de carbure de silicium.

Plus particulièrement, les matériaux à base de carbure de silicium peuvent être choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC ; par exemple, à fibres ou à « whiskers » ; les composites SiC/SiC à matrice autocicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

Généralement lesdits matériaux à base de carbure de silicium ont une teneur en carbure de silicium au moins égale à 50% en masse, de préférence au moins égale à 80% en masse, et de préférence encore égale à 100% en masse.

L'invention concerne, en outre, un assemblage comprenant au moins deux pièces en matériaux à base de SiC tel que défini dans la revendication 18. D'autres caractéristiques et avantages de l'invention ressortiront mieux à la lecture de la description qui va suivre, donnée à titre illustratif et non limitatif en relation avec les dessins joints, dans lesquels :

### BRÈVE DESCRIPTION DES DESSINS

La Figure 1 est une vue schématique montrant la disposition des plaques de matériau à base de SiC et de la pâte de composition de brasure pour le brasage en configuration capillaire ;
La figure 2 est une vue schématique des éprouvettes utilisées pour les essais mécaniques, notamment en cisaillement des joints et assemblages préparés dans les exemples.

### EXPOSÉ DÉTAILLÉ DE MODES DE RÉALISATION PARTICULIERS

La première étape du procédé selon l'invention consiste, tout d'abord, généralement, à préparer, élaborer une composition de brasure, en d'autres termes un alliage de brasage contenant du silicium, et de l'yttrium.

L'alliage de brasage est un alliage binaire yttrium (Y) - Silicium (Si).

La température de fusion de cet alliage de brasage est inférieure ou égale à 1300°C. L'élément prépondérant de l'alliage est le silicium.

Les proportions massiques pour l'alliage binaire Si-Y sont de 56% à 70% de silicium et de 44 % à 30% d'Yttrium. La composition de brasure préférée pour cet alliage binaire est de 59 % en masse de Si et de 41% en masse d'Y.

La composition de brasure est, généralement, une composition pulvérulente qui peut être préparée, par exemple, en synthétisant, tout d'abord, à partir des éléments purs un composé intermétallique contenant du silicium, de l'yttrium.

La synthèse d'une telle composition intermétallique se fait, par exemple, en introduisant le silicium -par exemple, sous la forme de morceaux-l'yttrium -par exemple, sous la forme de fil, de morceaux, ou autres- dans un creuset réfractaire en alumine, par exemple, en chauffant, par exemple, à une température de 1250°C à 1400°C, pour faire fondre les différents constituants de ladite composition et obtenir le composé intermétallique final désiré, homogène. Le composé intermétallique obtenu est ensuite broyé dans tout appareil adéquat, par exemple, dans un mortier pour obtenir une poudre de granulométrie adéquate, c'est-à-dire, que les grains ont, par exemple, un diamètre de 1 à 250 µm.

Au lieu d'être synthétisé, ledit composé intermétallique peut également être un composé du commerce se présentant sous la forme d'une poudre de composé intermétallique de granulométrie et de pureté connues. Parmi ces poudres du commerce, on peut citer, par exemple : la poudre du composé YSi₂ de marque CERAC®, de pureté 99,5 % et de granulométrie de 50 à 100 µm.

Mais, afin d'ajuster la teneur en Si de la composition de brasure, il peut être nécessaire de mélanger une des poudres de composé intermétallique mentionnées ci-dessus et notamment YSi₂ avec de la poudre de silicium pur. Cette poudre de silicium pur peut être préparée à partir de morceaux de silicium pur broyé dans tout appareil adéquat, par exemple, dans un mortier, pour obtenir une poudre de granulométrie adéquate dont les grains ont, par exemple, un diamètre de 1 à 250 µm.

Au lieu d'être ainsi préparée, ladite poudre de silicium pur peut également être une poudre du commerce de granulométrie et de pureté connues. Parmi ces poudres du commerce, on peut citer, par exemple : la poudre de Si pur, de marque CERAC®, de pureté de 99,5 % ou 99,99 % et de granulométrie de l'ordre de 50 µm.

La poudre composée du mélange des poudres de composé intermétallique et de Si constitue, dans ce cas, la composition de brasure.

Ainsi de manière préférée la composition de brasure binaire sera préparée en pesant des poudres des composés Si et YSi₂ dans les proportions retenues selon l'invention et en mélangeant ensuite ces poudres dans un « Turbula » pendant au moins 30 minutes.

Selon l'invention, on peut effectuer, en outre, un ajout d'un renfort dans la composition de brasure préalablement au brasage, afin notamment d'améliorer la tenue mécanique de l'assemblage.

Ce renfort peut être un renfort de C ou de SiC.

Ce renfort peut se présenter sous la forme de particules, par exemple d'une poudre telle qu'une poudre de SiC ; de fibres par exemple de fibres de SiC ou de céramiques; d'un non tissé dans lequel des fibres sont isolées, d'un tissu de fibres.

Le renfort ajouté tel qu'une poudre de SiC représente, généralement, de 5 à 49% en poids de la composition de brasure. La poudre de SiC peut être, par exemple, une poudre commerciale, telle que la poudre de marque STARCK®, de pureté 98,5 % et de granulométrie inférieure à 10 µm.

La poudre de composition de brasure, (Si et Y) éventuellement additionnée du renfort tel qu'une poudre de SiC, est mise en suspension de manière classique dans un liant, cément organique liquide, de préférence à la fois visqueux et collant, afin d'obtenir une pâte, suspension de composition de brasure éventuellement additionnée d'un renfort permettant un étalement homogène sur les surfaces des pièces, substrats en matériau à base de carbure de silicium à braser.

Le liant, cément, se décompose généralement par exemple entre 100 et 300°C sans laisser de traces. Il peut s'agir par exemple d'un cément de type NICROBRAZ®.

La deuxième étape du procédé selon l'invention consiste généralement à réaliser l'assemblage par brasage proprement dit.

Préalablement à l'assemblage, les deux (ou plus) surfaces des pièces en matériaux à base de SiC à assembler sont généralement dégraissées, nettoyées, dans un solvant organique par exemple du type cétone, ester, éther, alcool, ou un mélange de ceux-ci, etc. un solvant préféré étant l'acétone ou un mélange acétone-alcool éthylique-éther par exemple dans les proportions 1/3, 1/3, 1/3 ; on peut aussi nettoyer les pièces successivement avec plusieurs solvants différents par exemple avec de l'acétone puis de l'éthanol. Les pièces sont ensuite séchées.

Les pièces en matériaux à base de SiC à assembler sont en général au nombre de deux, mais on peut aussi assembler simultanément un plus grand nombre de pièces pouvant aller jusqu'à 100.

Par pièce en matériaux à base de SiC, on entend généralement tout élément, ou entité de forme et de taille quelconques entrant par exemple, après assemblage avec une ou plusieurs autres pièces, dans des structures de plus grande dimension.

Selon l'invention, il est possible d'assembler, avec à chaque fois d'excellents résultats, des pièces de géométrie, forme complexe et/ou de grande taille, par exemple avec 0,5 m² de surface à braser ou plus.

Par matériau à base de carbure de silicium, on entend généralement ici tous les matériaux comprenant au moins 50% en masse de carbure de silicium, de préférence au moins 80% en masse de carbure de silicium, de préférence encore 100 % en masse de carbure de silicium, dans ce dernier cas le matériau est constitué, composé, uniquement de carbure de silicium.

Les matériaux à base de carbure de silicium peuvent être choisis parmi les carbures de silicium pur tels que le carbure de silicium pur α (SiCα) ou β (SiCβ) et les matériaux composites à base de SiC tels que les composites à fibres et/ou à matrice de carbure de silicium.

Comme exemples de matériaux à base de SiC, on peut citer le carbure de silicium dense pur ou carbure de silicium fritté sans pression ("PLS-SiC", à savoir « PressureLess Sintered SiC », en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur ; ainsi que les composites SiC/SiC, par exemple, à fibres ou à « Whiskers » ; les composites SiC/SiC à matrice autocicatrisante ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN. Il a été constaté, de manière surprenante, que le procédé de l'invention permettait un brasage des composites avec d'excellents résultats.

Les deux pièces ou plus à assembler peuvent être en un même matériau, à base de carbure de silicium par exemple en PLS (« Pressureless Sintered ») α-SiC, ou en composite SiC-SiC ou chacune des pièces peut être en un matériau différent.

La suspension, pâte de la composition de brasure décrite précédemment, est étalée, enduite, appliquée, par exemple avec une brosse ou un pinceau, de préférence de façon homogène sur la surface d'au moins l'une des pièces en matériau à base de carbure de silicium à assembler puis on met en contact la ou les surface(s) enduite(s) de pâte des deux pièces à assembler. Cette configuration de brasage est appelée « configuration sandwich » car la pâte de la composition de brasure est placée directement entre les surfaces des pièces à assembler.

La quantité de pâte, suspension de composition de brasure à mettre en oeuvre dans cette configuration est généralement de 10 mg/cm² à 30 mg/cm², par exemple de 20 mg/cm².

La configuration « sandwich » s'applique aussi bien pour des joints « fins », c'est-à-dire d'une épaisseur inférieure à 200 micromètres, que pour des joints épais, c'est-à-dire d'une épaisseur supérieure ou égale à 200 micromètres.

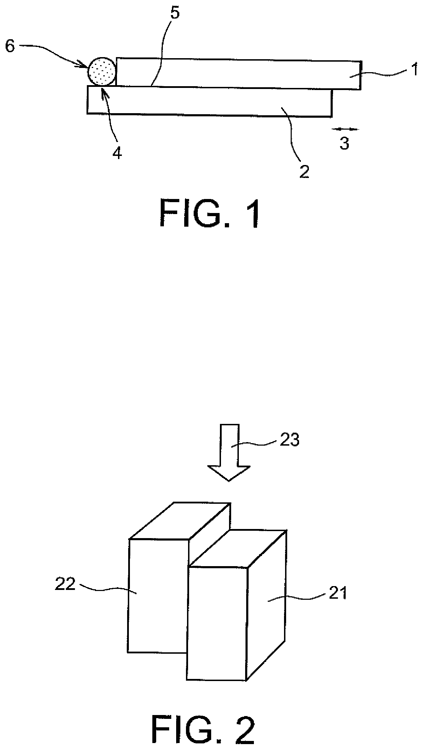

Ou bien comme cela est représenté sur la Figure 1, les pièces à assembler par exemple sous la forme de plaques (1, 2), sont mises en contact, sans avoir mis de composition de brasure entre elles en observant un écart, décalage (3) entre celles-ci, généralement de quelques mm, par exemple de 1 mm, 2 mm, à 10 mm de façon à créer une surface (4) susceptible de recevoir la suspension ou pâte à proximité du joint (5) formé par les surfaces à assembler des pièces à assembler, puis on dépose la suspension ou pâte de composition de brasure par exemple sous la forme d'un cordon de brasure (6) sur cette surface à proximité du joint, au bord du joint.

Cette configuration de brasage est appelée « configuration capillaire ». Avec les compositions de brasure selon l'invention il est possible de réaliser un tel brasage capillaire, avec une infiltration de la brasure liquide dans le joint de brasage pendant le cycle de brasage, sans disposer directement la composition de brasure entre les pièces à assembler comme dans le cas de la « configuration sandwich ». Le brasage capillaire est possible pour des joints « fins » d'une épaisseur inférieure à 200 micromètres.

La quantité de pâte, suspension de composition de brasure à mettre en oeuvre dans cette configuration capillaire est généralement de 10 mg/cm² à 30 mg/cm², par exemple de 20 mg/cm².

Afin d'accélérer significativement la cinétique de mouillage des matériaux à base de SiC par la composition de brasure, l'alliage de brasage selon l'invention, et de réduire encore l'angle de mouillage, il est possible de déposer du carbone, par exemple de la poudre de carbone, sur au moins une des surfaces à assembler des substrats, pièces en matériau à base de SiC, avant d'appliquer la pâte de composition de brasure.

Le dépôt de carbone peut se faire par exemple en enduisant au moins une des surfaces à assembler des substrats, pièces en matériau à base de carbure de silicium d'une pâte contenant un cément organique mélangé avec de la poudre de carbone.

Le dépôt de carbone peut être réalisé par crayonnage, frottement, de la surface d'au moins une des pièces à assembler avec une mine en graphite, ou bien encore par dépôt chimique en phase vapeur (« CVD ») ou dépôt physique en phase vapeur (« PVD »).

Les pièces prêtes à être brasées sont alors disposées dans un dispositif de chauffage tel qu'un four ou soumises à un chauffage par tout autre moyen adéquat.

Le four est généralement sous vide ou sous atmosphère de gaz neutre.

Généralement, le vide est un vide secondaire, c'est-à-dire que la pression est de 10⁻³ à 10⁻⁵ Pa, par exemple, de 10⁻⁴ Pa.

De préférence, le gaz neutre est de l'argon.

L'invention permet même d'utiliser de l'argon de qualité commerciale (avec généralement 5 ppm de O₂).

Les pièces à assembler sont soumises par exemple dans le four à un cycle thermique.

Ainsi l'ensemble formé par les pièces et la composition de brasure peut-il être amené à la température de brasage en observant une montée en température de préférence « lente », avec une ou plusieurs rampes de température depuis la température ambiante.

Cette montée en température peut se faire par exemple avec une rampe de température à raison de 1°C à 5°C/minute.

Le palier de brasage est généralement réalisé à une température, qui est la température de brasage, de préférence supérieure d'au moins 30°C à la température de fusion ou température de liquidus de la composition de brasure. La température de brasage est par ailleurs inférieure ou égale à 1300°C.

Selon les compositions, cette température du liquidus varie de 1215°C à 1260°C. La température de brasage variera donc, par exemple, de 1245°C à 1280°C, de préférence elle est de 1250°C.

Une telle température de fusion des compositions permet, selon un autre avantage du procédé de l'invention, une utilisation de l'assemblage, jusqu'à 1000°C et même jusqu'à 1100°C.

Cette température de brasage est maintenue pendant une durée de 20 à 60 minutes par exemple de 30 minutes, c'est ce que l'on appelle le palier de brasage.

Un palier de brasage préféré est réalisé à une température de brasage de 1250°C pendant 30 minutes.

De manière surprenante, bien que la température de brasage soit inférieure à 1300°C, elle permet à la fois un bon accrochage et un bon mouillage de la composition de brasure sur les surfaces des substrats en matériaux à base de carbure de silicium. En effet, les essais de goutte posée montrent qu'il est possible d'atteindre des angles de contact inférieurs à 60° et de l'ordre de 50°. Plus précisément, l'angle de mouillage stationnaire obtenu avec la composition de brasure sur du SiC est de l'ordre de 50° à 1250°C. Après 5 minutes de palier à 1250°C, l'angle est encore élevé, entre 70° et 80°. L'angle stationnaire, de l'ordre de 50°, est atteint au bout de 30 minutes de palier à 1250°C.

Le mouillage satisfaisant obtenu avec les compositions de brasure est indispensable pour la qualité du remplissage des joints formés, mais pas toujours suffisant pour garantir un bon comportement mécanique.

La cinétique de mouillage peut être encore accélérée en observant un premier palier à une température généralement de 1120°C à 1150°C et d'une durée de 60 à 90 minutes avant de réaliser le palier de brasage proprement dit dans les conditions déjà mentionnées ci-dessus par exemple à une température de 1245°C à 1280°C. En observant ainsi ce premier palier préalablement au palier de brasage proprement dit, l'angle de mouillage stationnaire, de l'ordre de 50°, est obtenu dès 10 minutes du palier de brasage.

La durée de ces paliers peut être augmentée et par exemple être portée à 120 minutes pour le premier palier et 60 minutes pour le second palier pour des pièces de très grandes dimensions par exemple avec 0,5 m² de surface à braser ou plus.

Une accélération de la cinétique de mouillage peut également être obtenue en supprimant ce premier palier et en effectuant un chauffage lent à une température de 1245°C à 1280°C de façon à ce que la durée d'exposition de l'assemblage dans ce domaine de température soit de l'ordre de 60 à 90 minutes.

Comme on l'a déjà indiqué plus haut l'application de carbone sur les surfaces à assembler améliore la cinétique de mouillage. Si l'on réalise un dépôt de carbone et que l'on observe deux paliers, un angle de contact de l'ordre de 40° est obtenu dès 10 minutes de palier à 1250°C. L'angle stationnaire, après 15 minutes, est légèrement inférieur à 40°.

Après chauffage de l'ensemble formé par les pièces et la composition de brasure à une température suffisante pour faire fondre la composition de brasure, on refroidit les pièces et la composition de brasure afin de former après solidification de celle-ci, un joint moyennement réfractaire.

Plus précisément, en fin de cycle de brasage, suite au palier de brasage, on refroidit l'assemblage jusqu'à la température ambiante, à raison par exemple de 5°C ou 6°C par minute.

Pendant le refroidissement, la brasure se solidifie et l'assemblage des pièces en matériau à base de carbure de silicium est effectif aussi bien dans le cas où l'on a utilisé une configuration « sandwich » que dans le cas où l'on a utilisé une configuration « capillaire ».

Les assemblages réalisés par le procédé selon l'invention ont été testés en cisaillement pur à température ambiante. La contrainte à rupture moyenne obtenue est de l'ordre de 30 MPa.

Les assemblages de pièces en carbure de silicium comportant des joints préparés par le procédé selon l'invention permettent de réaliser des structures, appareils, composants de formes complexes ayant des températures d'utilisation élevées pouvant aller jusqu'à 1 000°C voire 1100°C avec une grande précision.

On sait en effet que les propriétés mécaniques du carbure de silicium :
- grande dureté ;
- bas coefficient de dilatation ;
- résistance à la rupture élevée ;
- bonne résistance au choc thermique ;
- ainsi que sa très bonne conductivité en font un matériau incontournable pour les présentes et les futures applications industrielles à haute température.

De plus, le SiC présente une très bonne résistance chimique aux divers acides, y compris l'acide fluorhydrique et une très bonne résistance à l'oxydation sous air à haute température jusqu'à 1 300°C.

En d'autres termes, le procédé selon l'invention peut notamment s'appliquer à la fabrication de tout dispositif, appareil, structure, composant, nécessitant un assemblage moyennement réfractaire entre au moins deux substrats, pièces à base de carbure de silicium en garantissant à la fois une bonne tenue mécanique et une étanchéité satisfaisante au niveau de l'assemblage.

Ce type de dispositif, appareil, structure, composant peut répondre à des besoins dans différents domaines :
- le domaine du génie thermique, notamment pour concevoir des échangeurs de chaleur très performants car le carbure de silicium présente une bonne conductivité thermique et une bonne tenue aux hautes températures dans des environnements extrêmes.
- le domaine du génie mécanique pour réaliser dans des dispositifs embarqués des composants légers, rigides, réfractaires, résistant à l'abrasion et résistant aux sollicitations mécaniques.
- le domaine du génie chimique car le carbure de silicium est résistant à de nombreux produits chimiques corrosifs par exemple comme les bases et les acides forts.
- le domaine du génie nucléaire pour la réalisation du gainage des combustibles.
- les domaines de l'optique spatiale (miroir de télescope en SiC) et de l'aéronautique (pièce en composite SiC/SiC).
- l'électronique de puissance qui utilise le SiC.

L'invention va maintenant être décrite au moyen des exemples suivants donnés bien entendu à titre illustratif et non limitatif.

### Exemple 1 :

Cet exemple décrit des essais de goutte posée réalisés avec une composition, alliage de brasure de composition 59 % en masse de Si et 41 % en masse de Y sur du SiC α pur fritté, en observant un unique palier de brasage à 1255°C et à 1270°C.

### a) Préparation de la composition de brasure et de la pâte de brasure

La brasure de composition visée 59 % en masse de Si et 41 % en masse de Y a été préparée à partir de poudre de Si et de poudre de YSi₂.

Ces poudres ont été pesées en respectant les proportions de la composition de brasure. Elles ont ensuite été mélangées au « Turbula » pendant au moins 30 minutes pour obtenir un mélange de poudres homogène.

Un liant organique (cément NICROBRAZ®) a été ajouté à ce mélange de poudres afin de former une pâte visqueuse.

### b) Essai de « goutte posée » à 1255 °C

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire avec un seul palier, qui est le palier de brasage, à 1255°C.

L'amas de brasure fond lors de ce traitement thermique et forme une goutte que l'on appelle « goutte posée ».

L'angle de mouillage de la goutte est mesuré in situ pour différentes durées du palier de brasage.

Après 10 minutes de palier, l'angle de contact est de l'ordre de 70°. L'angle stationnaire est obtenu après 30 minutes de palier et il est de l'ordre de 50°.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier il n'y a pas eu de formation de composés fragile à l'interface.

### c) Essai de « goutte posée » à 1270°C

Un essai a été réalisé dans les mêmes conditions que celles décrites dans le paragraphe b) ci-dessus, mais avec un palier de brasage de 1270°C.

Cet essai a conduit aux mêmes résultats que ceux mentionnés dans le paragraphe b).

### Exemple 2 :

Cet exemple décrit des essais de goutte posée réalisés avec une composition, alliage de brasure de composition 59 % en masse de Si et 41 % en masse de Y sur du SiC α pur fritté, en observant un palier de brasage à 1270°C, précédé d'un palier à 1135 °C.

### a) Préparation de la composition de brasure et de la pâte de brasure

La composition de brasure et la pâte de brasure ont été préparées comme cela est décrit dans l'exemple 1.

### b) Essai de goutte posée

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire qui comprend deux paliers :
- un premier palier de 90 minutes à 1135 °C ;
- un second palier qui est le palier de brasage à 1270°C.

L'amas de brasure fond lors de ce traitement thermique et forme une goutte que l'on appelle « goutte posée ».

L'angle de mouillage de la goutte est mesuré in situ pour différentes durées du palier de brasage.

Après 10 minutes de palier, l'angle de contact est de l'ordre de 50°. L'angle stationnaire est obtenu à partir de 30 minutes de palier et il est légèrement inférieur à 50°.

### Exemple 3

Cet exemple décrit des essais de goutte posée réalisés avec une composition, alliage de brasure de composition 59 % en masse de Si et 41 % en masse de Y sur du SiC α pur fritté, carboné, en observant un palier de brasage à 1270°C, précédé d'un palier à 1135°C.

Le dépôt de carbone peut être fait par dépôt chimique ou physique en phase vapeur -CVD ou PVD- ou par frottement d'une mine graphite. La teneur en carbone est entre 0,1 mg/cm² et 1 mg/cm². Pour cet échantillon, on a utilisé la mine graphite.

### a) Préparation de la composition de brasure et de la pâte de brasure

La composition de brasure et la pâte de brasure ont été préparées comme cela est décrit dans l'exemple 1.

### b) Essai de goutte posée

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire qui comprend deux paliers identiques à ceux décrits dans l'exemple 2 :
- un premier palier de 90 minutes à 1135 °C;
- un second palier qui est le palier de brasage à 1270°C.

L'amas de brasure fond lors de ce traitement thermique et forme une goutte que l'on appelle « goutte posée ».

L'angle de mouillage de la goutte est mesuré in situ pour différentes durées du palier de brasage.

Après 10 minutes de palier, l'angle de contact est de l'ordre de 40°. L'angle stationnaire est obtenu à partir de 15 minutes de palier et il est légèrement inférieur à 40°.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage.

### Exemple 4

Cet exemple décrit la préparation de liaisons, assemblages entre deux pièces en carbure de silicium SiC α pur fritté, en mettant en oeuvre le procédé de brasage selon l'invention, le brasage étant réalisé en configuration capillaire en utilisant une composition de brasure constituée de 59 % en masse de Si et de 41 % en masse de Y.

Cet exemple décrit en outre des essais, tests mécaniques réalisés sur ces assemblages.

### a) Préparation de la composition de brasure, de la pâte de brasure, et des pièces à assembler

La brasure de composition visée, à savoir 59 % en masse de Si et 41 % en masse de Y a été préparée à partir de poudre de Si et de poudre de YSi₂.

Ces poudres ont été pesées en respectant les proportions de la composition de brasure. Elles ont ensuite été mélangées au « Turbula » pendant au moins 30 minutes pour obtenir un mélange de poudres homogène.

Un liant organique (cément NICROBRAZ®) a été ajouté à ce mélange de poudres afin de former une pâte visqueuse.

Les pièces en SiC fritté à assembler sont des plaques de dimensions 20 x 20 mm² et d'épaisseur 1 mm.

Les pièces sont nettoyées à l'acétone puis à l'éthanol et enfin séchées.

Les substrats, pièces sont mis en contact en laissant un décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1). La quantité déposée est comprise entre 50 et 100 mg pour cet assemblage.

### b) Brasage

Les pièces mises en contact et prêtes à être brasées sont placées dans un four de brasage sous vide secondaire et soumises à un cycle thermique de brasage sous vide qui comprend deux paliers identiques à ceux décrits dans l'exemple 2 :
- un premier palier de 90 minutes à 1135 °C;
- un second palier qui est le palier de brasage à 1270°C.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle de la microscopie électronique à balayage.

### d) Préparation des éprouvettes d'essais mécaniques et résultats des essais mécaniques

Des éprouvettes (4 éprouvettes) d'essais mécaniques ont préparées par brasage de 2 pièces de dimensions 20x10x1 mm³ (21,22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement (23) à température ambiante.

### • Résultats des essais mécaniques :

Les contraintes à rupture déterminées pour chacune des 4 éprouvettes sont 27 MPa ; 21 MPa ; 21 MPa ; 34 MPa ; soit une moyenne de 25 MPa.

### Exemple 5

Cet exemple décrit la préparation de liaisons, assemblages entre deux pièces en carbure de silicium SiC α pur fritté carboné, en mettant en oeuvre le procédé de brasage selon l'invention, le brasage étant réalisé en configuration capillaire en utilisant une composition de brasure constituée de 59 % en masse de Si et de 41 % en masse de Y.

Cet exemple décrit en outre des essais, tests mécaniques réalisés sur ces assemblages.

### a) Préparation de la composition de brasure, de la pâte de brasure et des pièces à assembler.

La composition de brasure et la pâte de brasure sont préparées comme dans l'exemple 4.

Les pièces en SiC fritté à assembler sont des plaques de dimensions 20 x 20 mm² et d'épaisseur 1 mm.

Les pièces sont nettoyées à l'acétone puis à l'éthanol et enfin séchées.

Les pièces sont carbonées par crayonnage à l'aide d'une mine graphite.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure comme dans l'exemple 4 (voir la figure 1). La quantité déposée est comprise entre 50 et 100 mg pour cet assemblage.

### b) Brasage

Les pièces mises en contact et prêtes à être brasées sont placées dans un four de brasage sous vide secondaire et soumises à un cycle thermique de brasage sous vide identique à celui de l'exemple 4, qui comprend deux paliers identiques à ceux décrits dans l'exemple 2 :
- un premier palier de 90 minutes à 1135 °C;
- un second palier qui est le palier de brasage à 1270°C.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle de la microscopie électronique à balayage.

### d) Préparation des éprouvettes d'essais mécaniques et résultats des essais mécaniques

Des éprouvettes (4 éprouvettes) d'essais mécaniques ont été préparées par brasage de 2 pièces de dimensions 20x10x1 mm³ (21, 22) avec la pâte de brasure préparée en a) ci-dessus et dans les conditions de brasage décrites en b) ci-dessus.

Les éprouvettes sont schématisées sur la figure 2. Elles sont fixées dans un montage et sollicitées en cisaillement (23) à température ambiante.

### • Résultats des essais mécaniques :

Les contraintes à rupture déterminées pour chacune des 4 éprouvettes sont 16 MPa ; 49 MPa ; 37 MPa ; 35 MPa ; soit une moyenne de 34 MPa.

### Exemple 6

Cet exemple est un exemple comparatif qui décrit des essais de goutte posée réalisés avec une composition, alliage de brasure comparative, non conforme à l'invention de composition 6 % en masse de Si et 94 % en masse de Y sur du SiC α pur fritté.

### a) Préparation de la composition de brasure et de la pâte de brasure

La brasure de composition visée 6 % en masse de Si et 94 % en masse de Y a été préparée à partir de poudre de YSi₂, et de petits morceaux de Y. il s'agit d'une composition qui se situe dans une autre zone de basse température du diagramme de phase Y-Si.

Ces poudres ont été pesées en respectant les proportions de la composition de brasure. Elles ont ensuite été mélangées au « Turbula » pendant au moins 30 minutes pour obtenir un mélange de poudres homogène.

Un liant organique (cément NICROBRAZ®) a été ajouté à ce mélange de poudres afin de former une pâte visqueuse.

### b) Essai de goutte posée

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire.

Le chauffage a été programmé jusqu'à 1520°C de façon à observer la fusion de l'amas de brasure (qui en principe doit fondre lors de ce traitement thermique et former une goutte que l'on appelle « goutte posée ») et son étalement sur le SiC.

Aucune fusion franche n'a été observée jusqu'à 1520°C.

L'amas de brasure n'a presque pas fondu, même au-delà de la température théorique de fusion de cet alliage (le début de la fusion théorique de cet alliage est à 1260°C, et la fusion totale doit théoriquement se situer à 1400°C d'après le diagramme de phase Y-Si), il s'est seulement déformé.

Cette situation ne permet pas d'envisager le brasage d'un matériau à base de SiC avec cette composition de brasure à une température inférieure à 1300°C et même jusqu'à 1520°C, puisqu'il n'y a eu qu'une fusion très partielle même à cette température élevée de 1520°C.

Cet exemple comparatif démontre que l'utilisation du diagramme de phase binaire Y-Si est insuffisante pour prévoir le comportement de la brasure vis-à-vis du carbure de silicium.

De manière étonnante seules les teneurs en Si et en Y très spécifiques des compositions de brasure garantissent un assemblage effectif de deux substrats à base de SiC, alors que rien ne pouvait le laisser prévoir.

### REFERENCES

[1] Gasse A., Coing-Boyat G., Bourgeois G., "*Method using a thick joint for joining parts in SiC-based materials by refractory brazing and refractory thick joint thus obtained",* Brevet US-A-5 975 407, 1999.
[2] Gasse A., *"Method for assembling parts made of materials based on SiC by non-reactive refractory brazing, brazing composition, and joint and assembly obtained by said method",* Demande US-A1-2003/0038166.
[3] Heap H., *"Method for assembling parts made of materials based on SiC by non-reactive refractory brazing, brazing composition, and joint and assembly obtained by said method",* Brevet US-A-2003/0038166, 1974.
[4] Montgomery F.C., Streckert H.H., *Braze for Silicon Carbide bodies,* Brevet US-A-5 447 683, 1995

## Revendications

1. Procédé d'assemblage d'au moins deux pièces (1, 2) en matériaux à base de carbure de silicium par brasage moyennement réfractaire non réactif, dans lequel on met en contact les pièces (1, 2) avec une composition de brasure (6) non réactive et on chauffe l'ensemble formé par les pièces (1, 2) et la composition de brasure (6) à une température de brasage suffisante pour faire fondre la composition de brasure (6) afin de former un joint moyennement réfractaire, **caractérisé en ce que** la composition de brasure (6) non réactive est un alliage binaire constitué, en pourcentages en masse, de 56% à 70% de silicium et de 44% à 30% d'yttrium.

2. Procédé selon la revendication 1, dans lequel ladite composition de brasure (6) est un alliage binaire, constitué en pourcentages en masse, de 59 % de silicium et de 41 % d'yttrium.

3. Procédé selon l'une quelconque des revendications précédentes dans lequel, préalablement au brasage, on effectue un ajout d'un renfort dans la composition de brasure.

4. Procédé selon la revendication 3 dans lequel le renfort est en un matériau choisi parmi le SiC, et le C.

5. Procédé selon l'une quelconque des revendications 3 et 4 dans lequel le renfort se présente sous la forme de particules, par exemple d'une poudre ; de fibres ; d'un non tissé de fibres ; ou d'un tissu de fibres.

6. Procédé selon l'une quelconque des revendications 3 à 5, dans lequel ledit ajout d'un renfort est réalisé en une quantité de 5 à 49 % en masse par rapport à la masse de la composition de la brasure.

7. Procédé selon l'une quelconque des revendications précédentes dans lequel on forme une poudre de composition de brasure (6), on met en suspension cette poudre dans un liant organique de façon à obtenir une suspension ou pâte et en ce qu'on enduit au moins une surface des pièces à assembler avec la suspension ou pâte obtenue.

8. Procédé selon la revendication 7 dans lequel on enduit une surface à assembler d'au moins l'une des pièces (1, 2) à assembler avec la suspension ou pâte, puis on met en contact les surfaces à assembler des pièces (1, 2) de façon à ce que la suspension ou pâte soit intercalée entre celles-ci.

9. Procédé selon la revendication 7 dans lequel les pièces (1, 2) à assembler sont mises en contact en observant un décalage entre celles-ci de façon à créer une surface susceptible de recevoir la suspension ou pâte à proximité du joint formé par les surfaces à assembler des pièces (1, 2) à assembler, puis on dépose la suspension ou pâte sur cette surface.

10. Procédé selon l'une quelconque des revendications précédentes, dans lequel préalablement à la mise en contact avec la composition de brasure (6), on dépose du carbone, par exemple de la poudre de carbone sur au moins une des surfaces à assembler des pièces.

11. Procédé selon l'une quelconque des revendications précédentes dans lequel le brasage est effectué à une température de brasage supérieure d'au moins 30°C à la température de fusion de la composition de brasure.

12. Procédé selon la revendication 11 dans lequel le brasage est réalisé en effectuant un palier de brasage à une température de brasage de 1245°C à 1280°C, maintenue pendant une durée de 20 à 90 minutes.

13. Procédé selon la revendication 12 dans lequel le palier de brasage est effectué à une température de brasage de 1250°C maintenue pendant une durée de 30 minutes.

14. Procédé selon l'une quelconque des revendications 12 et 13 dans lequel préalablement au palier de brasage on observe un premier palier à une température de 1120°C à 1150°C maintenue pendant une durée de 30 à 120 minutes, de préférence de 60 à 90 minutes.

15. Procédé selon l'une quelconque des revendications précédentes dans lequel les matériaux à base de carbure de silicium sont choisis parmi les carbures de silicium pur tels que le carbure de silicium pur α (SiCα) ou β (SiCβ) et les matériaux composites à base de SiC tels que les composites à fibres et/ou à matrice de carbure de silicium.

16. Procédé selon l'une quelconque des revendications 1 à 15, dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC ; par exemple, à fibres ou à « whiskers » ; les composites SiC/SiC à matrice autocicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

17. Procédé selon l'une quelconque des revendications 1 à 16, dans lequel lesdits matériaux à base de carbure de silicium ont une teneur en carbure de silicium au moins égale à 50% en masse, de préférence au moins égale à 80% en masse, et de préférence encore égale à 100% en masse.

18. Assemblage comprenant au moins deux pièces (1,2) et un joint moyennement réfractaire entre ces au moins deux pièces (1,2), lesdites au moins deux pièces (1,2) étant en matériaux à base de carbure de silicium, **caractérisé en ce que** le joint est constitué, en pourcentages en masse de 56 à 70% de silicium, et de 44 à 30% d'yttrium.

## Patentansprüche

1. Verfahren zum Verbinden von mindestens zwei Werkstücken (1, 2) aus Materialien auf der Basis von Siliziumkarbid durch nicht-reaktives durchschnittlich hitzebeständiges Löten, bei dem man die Werkstücke (1, 2) in Kontakt bringt mit einer nicht-reaktiven Lötzusammensetzung (6) und man das durch die Werkstücke (1, 2) und die Lötzusammensetzung (6) gebildete Ganze auf eine Löttemperatur bringt, die ausreicht, die Lötzusammensetzung (6) zum Schmelzen zu bringen, um eine durchschnittlich hitzebeständige Verbindung zu bilden,
**dadurch gekennzeichnet, dass** die nicht-reaktive Lötzusammensetzung (6) eine binäre Legierung ist, bestehend, in Masseprozenten, aus 56 bis 70 % Silizium und 44 bis 30 % Yttrium.

2. Verfahren nach Anspruch 1, bei dem die genannte Lötzusammensetzung (6) eine binäre Legierung ist, bestehend, in Masseprozenten, aus 59 % Silizium und 41 % Yttrium.

3. Verfahren nach einem der vorhergehenden Ansprüche, bei dem man der Lötzusammensetzung vor dem Löten eine Verstärkung hinzugibt.

4. Verfahren nach Anspruch 3, bei dem die Verstärkung aus einem zwischen SiC und C ausgewählten Material ist.

5. Verfahren nach einem der Ansprüche 3 und 4, bei dem die Verstärkung sich in Form von Partikeln präsentiert, zum Beispiel in Form von einem Pulver; von Fasern; von einem Faser-Nichtgewebe; von einem Fasergewebe.

6. Verfahren nach einem der Ansprüche 3 bis 5, bei dem das genannte Hinzugeben einer Verstärkung mit einer Menge von 5 bis 49 Massenprozent in Bezug auf die Masse der Lötzusammensetzung erfolgt.

7. Verfahren nach einem der vorhergehenden Ansprüche, bei dem man ein Lötzusammensetzungspulver (6) vorbereitet, man dieses Pulver in einem organischen Bindemittel zur Suspension bringt, um eine Suspension oder Paste herzustellen, und man die hergestellte Suspension oder Paste auf wenigstens eine Oberfläche der zu verbindenden Werkstücke aufträgt.

8. Verfahren nach Anspruch 7, bei dem man eine zu verbindenden Oberfläche von wenigstens einem der Werkstücke (1, 2) mit der Suspension oder Paste bestreicht, dann die zu verbindenden Oberflächen der Werkstücke (1, 2) so in Kontakt bringt, dass die Suspension oder Paste sich zwischen ihnen befindet.

9. Verfahren nach Anspruch 7, bei dem man die zu verbindenden Werkstücke (1, 2) versetzt zueinander in Kontakt bringt, um in der Nähe der durch die zu verbindenden Oberflächen der zu verbindenden Werkstücke (1, 2) gebildeten Fuge eine geeignete Fläche zu schaffen für die Aufnahme der Suspension oder Paste ; dann trägt man die Suspension oder Paste auf diese Fläche auf.

10. Verfahren nach einem der vorhergehenden Ansprüche, bei dem man vor der Kontaktherstellung mit der Lötzusammensetzung (6) auf wenigstens eine der zu verbindenden Oberflächen der Werkstücke Kohlenstoff, zum Beispiel Kohlenstoffpulver, aufträgt.

11. Verfahren nach einem der vorhergehenden Ansprüche, bei dem die Lötung bei einer Löttemperatur erfolgt, die um mindestens 30°C höher ist als die Schmelztemperatur der Lötzusammensetzung.

12. Verfahren nach Anspruch 11, bei dem das Löten mit einer Lötstufe mit einer Temperatur von 1245°C bis1280°C und einer Dauer von 20 bis 90 Minuten durchgeführt wird.

13. Verfahren nach Anspruch 12, bei dem die Lötstufe bei einer Löttemperatur von 1250°C durchgeführt wird, die während einer Dauer von 30 Minuten aufrecht erhalten wird.

14. Verfahren nach einem der Ansprüche 12 und 13, bei dem man vor der Lötstufe eine erste Stufe mit einer Temperatur von 1120°C bis 1150°C und einer Dauer von 30 bis 120 Minuten, bevorzugt 60 bis 90 Minuten, einhält.

15. Verfahren nach einem der vorhergehenden Ansprüche, bei dem die Materialien auf der Basis von Siliziumkarbid ausgewählt werden unter den reinen Siliziumkarbiden wie zum Beispiel den Typ α (SiCα) oder β (SiCβ) Siliziumkarbiden und den Verbundmaterialien auf SiC-Basis wie zum Beispiel den Faser- und/oder den Siliziumkarbidmatrix-Verbundstoffen.

16. Verfahren nach einem der Ansprüche 1 bis 15, bei dem die Materialien auf der Basis von Siliziumkarbid ausgewählt werden unter dem drucklos gesinterten Siliziumkarbid ("PLS-SiC") ; dem Si infiltrierten Siliziumkarbid ("SiSiC" oder "RBSC") ; dem porösen rekristallisierten Siliziumkarbid ("RSiC") ; dem Siliziumgraphit (C-SiC), bestehend aus Graphit und überzogen mit einer SiC-Schicht ; den SiC/SiC-Verbundstoffen , zum Beispiel des Typs Fasern oder des Typs "Whiskers" ; den SiC/SiC-Verbundstoffen mit selbstheilender Matrix ; den C/SiC-Verbundstoffen, zum Beispiel mit Kohlenstofffasern oder "-whiskers" und mit SiC-Matrix ; den SiC-Monokristallen ; den Verbundstoffen des SiC mit einer anderen Keramik, zum Beispiel den SiC/Si₃N₄- und SiC/TiN-Verbundstoffen.

17. Verfahren nach einem der Ansprüche 1 bis 16, bei dem die genannten Materialien auf der Basis von Siliziumkarbid einen Siliziumkarbidgehalt von wenigstens 50 Massen%, bevorzugter wenigstens 80 Massen%, und noch bevorzugter 100 Massen% haben.

18. Verbund, umfassend wenigstens zwei Werkstücke (1, 2) und eine durchschnittlich hitzebeständige Dichtung zwischen diesen wenigstens zwei Werkstücken (1, 2), wobei diese wenigstens zwei Werkstücke (1, 2) aus Materialien auf der Basis von Siliziumkarbid sind, **dadurch gekennzeichnet, dass** die Dichtung aus, bezogen auf die Masse, 56 bis 70 % Silizium und 44 bis 30 % Yttrium, besteht.

## Claims

1. Process for the assembly of at least two parts (1, 2) made of silicon carbide-based materials by moderately refractory non-reactive brazing, in which the parts (1, 2) are placed in contact with a non-reactive brazing composition (6), and the assembly formed by the parts (1, 2) and the brazing composition (6) is heated to a brazing temperature that is sufficient to melt the brazing composition (6) in order to form a moderately refractory joint, **characterized in that** the non-reactive brazing composition (6) is a binary alloy consisting, as mass percentages, of 56% to 70% silicon and 44% to 30% yttrium.

2. Process according to Claim 1, in which the said brazing composition (6) is a binary alloy consisting, as mass percentages, of 59% silicon and 41% yttrium.

3. Process according to either of the preceding claims, in which, prior to brazing, a reinforcement is added to the brazing composition.

4. Process according to Claim 3, in which the reinforcement is made of a material chosen from SiC and C.

5. Process according to either of Claims 3 and 4, in which the reinforcement is in the form of particles, for example of a powder; of fibres; of a fibres nonwoven; or of a fibres fabric.

6. Process according to any one of Claims 3 to 5, in which the said addition of a reinforcement is performed in an amount of from 5% to 49% by mass relative to the mass of the brazing composition.

7. Process according to any one of the preceding claims, in which a brazing composition (6) powder is formed, this powder is suspended in an organic binder so as to obtain a suspension, slurry, or paste, and at least one surface of the parts to be assembled is coated with the suspension, slurry, or paste obtained.

8. Process according to Claim 7, in which a surface to be assembled of at least one of the parts (1, 2) to be assembled is coated with the suspension, slurry, or paste, and the surfaces to be assembled of the parts (1, 2) are then placed in contact so that the suspension, slurry, or paste is intercalated between them.

9. Process according to Claim 7, in which the parts (1, 2) to be assembled are placed in contact while maintaining an offset between them so as to create a surface capable of receiving the suspension, slurry, or paste close to the joint formed by the surfaces to be assembled of the parts (1, 2) to be assembled, and the suspension, slurry, or paste is then applied on this surface.

10. Process according to any one of the preceding claims, in which, prior to placing in contact with the brazing composition (6), carbon, for example carbon powder, is deposited onto at least one of the surfaces to be assembled of the parts.

11. Process according to any one of the preceding claims, in which the brazing is performed at a brazing temperature at least 30°C above the melting point of the brazing composition.

12. Process according to Claim 11, in which the brazing is performed by carrying out a brazing plateau at a brazing temperature of 1245°C to 1280°C, maintained for a period of 20 to 90 minutes.

13. Process according to Claim 12, in which the brazing plateau is carried out at a brazing temperature of 1250°C maintained for a duration of 30 minutes.

14. Process according to either of Claims 12 and 13, in which, prior to the brazing plateau, a first plateau is carried out at a temperature of 1120°C to 1150°C maintained for a duration of 30 to 120 minutes, preferably from 60 to 90 minutes.

15. Process according to any one of the preceding claims, in which the silicon carbide-based materials are chosen from pure silicon carbides such as pure α silicon carbide (a-SiC) or β silicon carbide (β-SiC) and SiC-based composite materials such as composites with silicon carbide fibres and/or with a silicon carbide matrix.

16. Process according to any one of Claims 1 to 15, in which the silicon carbide-based materials are chosen from pressureless sintered silicon carbide (PLS-SiC); Si-infiltrated silicon carbide (SiSiC or RBSC); porous recrystallized silicon carbide (RSiC); silicon graphite (C-SiC) consisting of graphite and covered with a layer of SiC; SiC/SiC composites, for example containing fibres or "whiskers"; SiC/SiC composites with a self-healing matrix; C/SiC composites, for example, containing carbon fibres or "whiskers" and an SiC matrix; SiC monocrystals; SiC composites with another ceramic, for example SiC/Si₃N₄ and SiC/TiN composites.

17. Process according to any one of Claims 1 to 16, in which the said silicon carbide-based materials have a silicon carbide content at least equal to 50% by mass, preferably at least equal to 80% by mass and more preferably equal to 100% by mass.

18. Assembly comprising at least two parts (1, 2) and a moderately refractory joint between said at least two parts (1, 2), said at least two parts (1, 2) being made of silicon carbide-based materials, **characterized in that** the joint consists, as mass percentages, of 56% to 70% silicon and 44% to 30% yttrium.
